# EUROPÄISCHE PATENTANMELDUNG

(11) **EP 0 977 381 A2**
(43) Veröffentlichungstag der Anmeldung: **02.02.2000**
(21) Anmeldenummer: 99112682.2
(22) Anmeldetag: 02.07.1999
(51) Int. Cl.: H04B 10/152

(54) **Optischer Datenbus für ein Fahrzeug**

(30) Priorität: 25.07.1998 DE 1983361
(71) Anmelder: Bayerische Motoren Werke Aktiengesellschaft, 80788 München (DE)
(72) Erfinder: Gräf, Michael, 80687 München (DE)

(57) **Zusammenfassung**

Bei einem optischen Datenbus für ein Fahrzeug mit Sende-/Empfangseinheiten (SEE), die über optische Verbindungsstrecken Datentelegramme austauschen und die mit elektrischer Energie versorgt sind, ist die empfangende SEE zur Reduktion des Energieverbrauchs deaktivierbar und anschließend für kurze Zeit reaktivierbar Die sendende SEE sendet einen Lichtimpuls aus, dessen zeitliche Länge größer als die Dauer ihrer Ruhephase ist.

## Beschreibung

Die Erfindung bezieht sich auf einen optischen Datenbus für ein Fahrzeug mit Sende-/Empfangseinheiten, die über optische Verbindungsstrecken Datentelegramme austauschen und die mit elektrischer Energie versorgt sind.

Derartige Datenbusse gewinnen bei Fahrzeugen zunehmend an Bedeutung. Auch bei abgestelltem Fahrzeug müssen die SEEs zumindest teilweise empfangsbereit sein. Hierzu muß mindestens der optische Empfänger, bei dem es sich z.B. um einen Fototransistor handelt, mit Betriebsspannung versorgt werden. Dabei fließt ein Strom von einigen mA. In der Summe ergeben diese zwar für sich geringen Ströme über eine größere Anzahl von Empfängern einen hohen Leistungsbedarf bei abgestelltem Fahrzeug.

Der Erfindung liegt in die Aufgabe zugrunde, einen Datenbus der eingangs genannten Art zu schaffen, der einen geringen Leistungsbedarf bei abgestelltem Fahrzeug besitzt, bei dem aber gleichzeitig die Betriebsbereitschaft gewährleistet ist.

Die Erfindung löst diese Aufgabe mit den Merkmalen des Patentanspruchs 1.

Durch die jeweils nur kurzzeitige Aktivierung der Empfangseinheiten ergibt sich eine deutliche Reduktion des Energiebedarfs. Dieser ist gegenüber dem Dauerbetrieb nur noch ein Bruchteil, der sich durch das Taktverhältnis, d. h. das Verhältnis von Einschalt- zu Ausschaltzeiten bestimmt. Ist das Taktverhaltnis beispielsweise gleich 1:1000, so reduziert sich der Leistungsbedarf praktisch auf ein Tausendstel, da der Stromverbrauch für die elektronischen Bauteile, die den Taktbetrieb des Empfängers erzeugen, bei entspechender Technologie zu vernachlässigen ist.

Die Betriebsbereitschaft des Datenbusses ist jederzeit sichergestellt. Die einzelnen SEEs werden über die optischen Verbindungsstrecken aktiviert. Eine zusätzliche oder alternative Aktivierung über die elektrische Energieversorgung ist nicht erforderlich.

Ausgestaltungen der Erfindung sind Gegenstand der weiteren Patentansprüche. Eines der Probleme mit dem sich die Erfindung zusätzlich beschäftigt, ist das des zeitlichen Abstands bzw. die Häufigkeit, mit der die einzelnen SEEs aktiviert werden. Eine Möglichkeit besteht dann, die SEEs in zeitlich regelmäßigen Abständen kurzzeitig zu aktivieren. Der Vorteil dabei ist, daß die sendenden SEEs jeweils nur Lichtimpulse ausgeben müssen, die eine konstante Länge besitzen.

Demgegenüber läßt sich eine weitere Reduktion des Leistungsverbrauchs erzielen, wenn die Ruhephasen möglichst fang gehalten werden. Sie können beispielsweise davon abhängen, wie lange das Fahrzeug bereits abgestellt ist und umso länger sein, je weiter diese Zeit zurückliegt. Daraus aber resultiert die Notwendigkeit, die Lichtimpulse in ihrer zeitlichen Länge zu variieren.

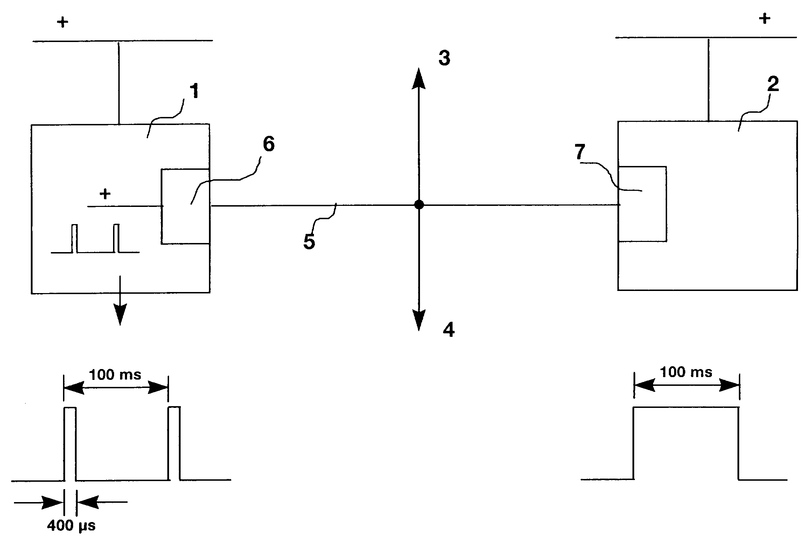

Anhand der Zeichnung ist die Erfindung weiter erläutert. Die einzige Figur zeigt zwei SEEs mit optischer Verbindungsstrecke, die Teile eines Datenbusses für ein Fahrzeug sind.

In einem nicht dargestellten Fahrzeug befinden sich Steuergeräte 1 und 2 sowie weitere angedeutete Steuergeräte 3 und 4, die über einen optischen Datenbus 5 in Verbindung stehen. Jedes Steuergerät besitzt Sende-/Empfangseinheiten 6 und 7, über die die Steuergeräte Datentelegramme (nicht dargestellt) austauschen. Die Steuergeräte und die Einheiten 6 und 7 werden mit elektrischer Energie 7 von einer nicht dargestellten Energiequelle versorgt.

Zur Reduktion des Leistungsverbrauchs der Sende-/Empfangseinheiten insbesondere bei abgestelltem Fahrzeug werden die Einheiten, die nicht ununterbrochen in Betrieb sein müssen, getaktet mit elektrischer Energie versorgt. Der als Fototransistor ausgebildete Empfänger der Einheit, hier als Einheit 6 angenommen, wird damit getaktet aktiviert. Beispielhaft geschieht dies, indem die Einheit 6 nach dem Abstellen des Fahrzeug in regelmäßigen zeitlichen Abständen und innerhalb von 100 ms für jeweils vierhundert µs eingeschaltet wird.

Um im Bedarfsfall tatsächlich ein von einem anderen Steuergerät ausgesandtes Lichtsignal empfangen und verarbeiten zu können, muß dieses Signal mindestens gleich lang wie die Ruhephase von 100 ms sein. Dies ist anhand des zugehörigen Steuergeräts 2 dargestellt. Die Einheit 7 sendet, wenn sie das Steuergerät 1 aktivieren möchte, ein Lichtsignal mit einer Länge von 100 ms aus. Die Einheit 6 kann, da sie währernd dieser Zeit für 400 µs aufnahmebereit ist, das Lichtsignal verarbeiten und das Steuergerät 2 einschalten. Das setzt aber voraus, daß das Steuergerät 2 ständig, d. h. auch bei abgestelltem Fahrzeug aktiviert ist.

Alternativ ist es auch möglich, auch das Steuergeräte 2 mit einem geringeren Leistungsbedarf zu betreiben. Hierzu muß das Steuergerät 2 bedarfsweise mit einem Lichtsignal beaufschlagt werden, das länger als die Ruhephasen des Steuergeräts 2 bzw. der Einheit 7 ist. Dies kann beispielsweise dann, wenn es sich beim Steuergerät 2 um das Steuergerät einer Fernbedienung handelt, in der Weise vorgenommen werden, daß das Fernbedienungssignal eine zeitliche Länge besitzt, die länger als die Ruhephasen des Steuergeräte 2 ist. Das Steuergerät 2 nimmt somit gegebenenfalls die Information wahr, daß ein Fernbedienungssignal von einem Sender abgegebenen wurde. Es kann dann seinerseits das Steuergerät 1 in der beschriebenen Weise aufwecken.

Damit ist es möglich, den Leistungsbedarf von Steuergeräten und insbesondere von Sende-/Empfangseinheiten (hier 6 und 7) deutlich zu reduzieren.

## Patentansprüche

1. Optischer Datenbus für ein Fahrzeug mit Sende-/Empfangseinheiten (SEE), die über optische Verbindungsstrecken Datentelegramme austauschen und die mit elektrischer Energie versorgt sind, **dadurch gekennzeichnet**, daß die empfangende SEE zur Reduktion des Energieverbrauchs deaktivierbar und anschließend für kurze Zeit reaktivierbar ist und daß die sendende SEE einen Lichtimpuls aussendet, dessen zeitliche Länge größer als die Dauer ihrer Ruhephase ist.

2. Optischer Datenbus nach Anspruch 1, **dadurch gekennzeichnet**, daß die empfangende SEE in regelmäßigen zeitlichen Abständen reaktivierbar ist.

3. Optischer Datenbus nach Anspruch 1, **dadurch gekennzeichnet**, daß die sendende SEE einen Lichtimpuls gleichbleibender zeitlicher Länge aussendet.

4. Optischer Datenbus nach einem der Ansprüche 1 bis 3, **dadurch gekennzeichnet**, daß die empfangende SEE selbsttätig deaktivierbar ist, wenn sie während einer definierten Zeit, die größer als die Dauer der Ruhephase ist, keinen Lichtimpuls erhält.
